# EUROPÄISCHE PATENTSCHRIFT

(11) **EP 1 808 456 B1**
(45) Veröffentlichungstag und Bekanntmachung des Hinweises auf die Patenterteilung: **24.03.2010**
(21) Anmeldenummer: 06000792.9
(22) Anmeldetag: 14.01.2006
(51) Int. Cl.: C08K 5/01, C08L 21/00, C08L 101/12, B60C 1/00

(54) **Kautschukmischung und Reifen**
Rubber composition and tire
Composition de caoutchouc et pneu

(43) Veröffentlichungstag der Anmeldung: 18.07.2007
(73) Patentinhaber: Continental Reifen Deutschland GmbH, 30165 Hannover (DE)
(72) Erfinder: Stübel, Christian, Dr., 30559 Hannover (DE); Dumke, Joachim, 31275 Lehrte (DE); Söhnen, Dietmar, Dr., 31867 Lauenau (DE); Weinreich, Hajo, Dr., 31840 Hessisch Oldendorf (DE); Stark, Annette, Dr., 30451 Hannover (DE)
(74) Vertreter: Finger, Karsten

(56) Entgegenhaltungen:
- EP-A- 1 075 967
- WO-A-2005/087859
- CANNING S P AMERICAN SOCIETY FOR TESTING AND MATERIALS: "1991 Annual Book of ASTM Standards, Volume 09.01" RUBBER, NATURAL AND SYNTHETIC - GENERAL TEST METHODS; CARBON BLACK. INCLUDES STANDARDS ON FOLLOWING COMMITTEES : D 11 ON RUBBER, D 24 ON CARBON BLACK, ANNUAL BOOK OF ASTM STANDARDS, PHILADELPHIA, ASTM, US, Bd. 9.01, 1991, Seite 317, XP002351270

## Beschreibung

Die Erfindung betrifft eine schwefelvernetzbare Kautschukmischung ohne aromatische Prozessöle, insbesondere für den Laufstreifen von Fahrzeugluftreifen, enthaltend zumindest einen Dienkautschuk, Ruß, Mineralölweichmacher und Harz. Die Erfindung betrifft ferner einen Fahrzeugluftreifen mit einem Laufstreifen, der zumindest zum Teil aus einer solchen, mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt. An Laufstreifenmischungen für PKW- und Van-Reifen werden beispielsweise höchste Anforderungen hinsichtlich des ABS-Trockenbremsens und ABS-Nassbremsens, des Abriebwiderstands, des Rollwiderstands, des Handlings und der Haltbarkeit gestellt.

Harze sind seit langem bekannte Zuschlagstoffe für Kautschukmischungen für Reifenlaufstreifen. Sie dienen vor allem als Verarbeitungshilfsmittel und bewirken die nötige Grünklebrigkeit der Kautschukmischungen. Ferner lassen sich durch die Harze bestimmte Vulkanisateigenschaften, wie Härte, Modul und Quellverhalten beeinflussen. Sie können auch als Vulkanisitionsharze oder Haftvermittler eingesetzt werden. Typische in der Kautschukindustrie eingesetzte Klebharze sind z. B. Cumaron-Inden-Harze, Petroleumharze, Terpenharze, Kolophoniumharze und Phenol-Formaldehydharze.

Aus der EP-A-1 589 068 ist es beispielsweise bekannt, dass eine Kautschukmischung für die Laufstreifenbase für eine höhere Flexibilität bei gleichzeitig hoher Steifigkeit cis-1,4-Polyisopren, Polybutadien mit hohem cis-Anteil, Mineralölweichmacher mit geringem Gehalt an polycyclischen aromatischen Verbindungen und Ruß, z. B. des Typs N121, enthält. Die Kautschukmischung kann auch Klebharze enthalten, die nicht näher spezifiziert sind.

Die EP-B- 0 899 297 offenbart Kautschukmischungen für Reifenlaufstreifen, die ein verbessertes Abriebverhalten und Verbesserungen in der Traktion und im Handling bringen sollen. Die Mischungen enthalten einen Kautschuk mit einer Glasübergangstemperatur von - 80 °C bis - 110 °C, einen weiteren Kautschuk mit einer höhere Glasübergangstemperatur, Ruß, z. B. des Typs N220, aromatisches Weichmacheröl und 15 bis 50 phr eines Harzes. Bei diesem Harz kann es sich beispielsweise um Cumaron-Inden-Harze mit einem mittleren Molekulargewicht von 420 bis 700 g/mol handeln.

Auch die WO 02/072688 A1 beschreibt Kautschukmischungen, die neben Kautschuken mit verschiedenen Glasübergangstemperaturen, aromatischen Weichmacherölen und Ruß auch Harze mit einem mittleren Molekulargewicht von 400 bis 2000 g/mol, z. B. Cumaron-Inden-Harze aufweisen.

Das Dokument WO2005/087859 beschreibt Kautschukzusammensetzungen für Reifen mit verbessertem Chipping-Verhalten. Die Kautschukzusammensetzungen bestehen aus Kautschuk, einem MES oder TDAE-ÖI, einem Polylimonen-Harz und einem verstärkenden Füllstoff. Die Verwendung eines Harzes mit einem mittleren Molekulargewicht von weniger als 400 g/mol und einem Erweichungspunkt von weniger als 40°C wird nicht vorgeschlagen.

Das Dokument EP-A-1 075 967 beschreibt die Verwendung von Cumaron-Inden Harzen mit einem Erweichungspunkt von 20°C bis 40°C in Kautschukzusammen-setzungen für Reifenlaufflächen. Die Kautschukzusammensetzungen enthalten ein aromatisches Weichmacheröl. Die Molekulargewichte der Harze werden nicht genannt.

Ein wichtiger Aspekt im Bereich der Haltbarkeit ist das Chipping-und-Chunking-Verhalten von Laufstreifenmischungen. Als Chipping wird dabei die schuppenartige Ablösung an der Reifenlauffläche (dünnes Abblättern von Gummimaterial) beim Fahren über schlechte Straßen bezeichnet, während als Chunking das Herausbrechen großvolumiger Stücke (z. B. Stollen) bezeichnet wird. Das Chipping-und-Chunking-Verhalten ist vor allem in Ländern mit trockenen und heißen klimatischen Bedingungen - verstärkt noch durch schlechte Straßenbedingungen - eine kritische Reifeneigenschaft, die es zu verbessern gilt.

Der vorliegenden Erfindung liegt daher die Aufgabe zugrunde, Kautschukmischungen, insbesondere für die Laufstreifen von Fahrzeugluftreifen, hinsichtlich ihres Chipping-und-Chunking-Verhaltens zu verbessern.

Gelöst wird diese Aufgabe erfindungsgemäß dadurch, dass die Kautschukmischung frei von aromatischen Prozessölen ist und
- zumindest einen Dienkautschuk,
- 5 - 100 phr zumindest eines Rußes mit einer Iodadsorptionszahl von 100 - 180 g/kg und einer DBP-Zahl von 100 - 150 cm³/100 g,
- 5 - 80 phr zumindest eines Mineralölweichmachers, der einen Gehalt an polycyclischen aromatischen Verbindungen bestimmt mit dem DMSO-Extrakt nach der IP 346 Methode von weniger als 3 Gew.-% bezogen auf das Gesamtgewicht des Mineralölweichmachers aufweist, und
- 5 - 30 phr zumindest eines Harzes mit einem mittleren Molekulargewicht bestimmt mit GPC von weniger als 400 g/mol und einem Erweichungspunkt (Ring und Kugel gemäß ASTM E 28) von weniger als 40 °C enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Unter aromatischen Prozessölen versteht man Mineralölweichmacher, die gemäß ASTM D 2140 über 25 %, vorzugsweise über 35 %, aromatische Bestandteile (C_{A}), weniger als 45 % naphthenische (C_{N}) und weniger als 45 % paraffinische (C_{P}) Bestandteile enthalten. Die Viskositäts-Dichte-Konstante gemäß ASTM D 2140 (VDK) von aromatischen Prozessölen ist größer als 0,9. Ferner werden die aromatischen Prozessöle nach ASTM D 2226 klassifiziert in Öltyp 101 und 102.

Die polycyclischen aromatischen Verbindungen umfassen aromatische Kohlenwasserstoffe, die mehr als drei kondensierte aromatische Ringe enthalten, und die davon abgeleiteten heterocyclischen Verbindungen mit Schwefel- und/oder Stickstoff. Die Ringe können mit kurzen Alkyl- oder Cycloalkylgruppen substituiert sein.

Überraschenderweise wurde gefunden, dass durch die spezielle Kombination von 5 bis 100 phr eines so genannten Aktivrußes, aufweisend eine hohe Struktur (hohe DBP-Zahl) und eine große Oberfläche (hohe Jodadsorptionszahl), mit 5 - 80 phr zumindest eines Mineralölweichmachers, aufweisend einen geringen Gehalt an polycyclischen Verbindungen, und mit 5 - 30 phr zumindest eines Harzes, aufweisend ein niedriges mittleren Molekulargewicht (< 400 g/mol) und einen niedrigen Erweichungspunkt (< 40 °C), das Chipping-und-Chunking-Verhalten deutlich verbessert werden kann. Andere gewünschte Reifeneigenschaften, wie ABS-Bremsen, Rollwiderstand und Abrieb, bleiben dabei auf zumindest gleichem Niveau.

Die schwefelvernetzbare Kautschukmischung enthält zumindest einen Dienkautschuk. Zu den Dienkautschuken zählen alle Kautschuke mit einer ungesättigten Kohlenstofflcette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und Styrol-Butadien-Copolymer (SBR). Diese Dienelastomere lassen sich gut zu der Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (40-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Bei dem Styrol-Butadien-Copolymer kann es sich um lösungspolymerisiertes Styrol-Butadien-Copolymer (S-SBR) mit einem Styrolgehalt, bezogen auf das Polymer, von 10 bis 45 Gew.-% und einem Vinylgehalt (Gehalt an 1,2-gebundenem Butadien, bezogen auf das gesamte Polymer) von 10 bis 80 Gew.-% handeln, welches zum Beispiel unter Verwendung von Lithiumalkylen in organischem Lösungsmittel hergestellt werden kann. Die S-SBR können auch gekoppelt und endgruppenmodifiziert sein. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt 15 bis 50 Gew.-% und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Die erfindungsgemäße Kautschukmischung enthält 5 - 100 phr des oder der Aktivruße(s). Der Aktivruß weist eine Iodadsorptionszahl (gemäß ASTM D 1510) von 100 - 180 g/kg, vorzugsweise von 110 - 130 g/kg, und einer DBP-Zahl (gemäß ASTM D 2414) von 100 - 150 cm³/100 g, vorzugsweise von 120 - 140 cm³/100 g auf. Es können beispielsweise Ruße der Typen N-242 und N-121 oder HV3396 verwendet werden.

In der erfindungsmäßen Mischung werden 5 - 80 phr eines Mineralölweichmachers oder Kombinationen aus mehreren Mineralölweichmachern eingesetzt. Diese Menge an Weichmacher gewährleistet eine optimale Verarbeitbarkeit bei guten dynamischen Eigenschaften und guter Kälteflexibilität. Als Mineralölweichmacher, deren Gehalte an polycyclischen aromatischen Verbindungen (PCA-Gehalt) bestimmt mit dem DMSO-Extrakt nach der IP 346 Methode weniger als 3 Gew.-% bezogen auf das Gesamtgewicht des Mineralölweichmachers betragen, können grundsätzlich alle dem Fachmann bekannten Mineralölweichmacher benutzt werden, die diese Werte erfüllen. Derartige Mineralölweichmacher sind z. B. MES (mild extraction solvate), das durch Solvent-Extraktion von Schweröldestillaten oder durch Behandlung von Schweröldestillaten mit Wasserstoff in Anwesenheit eines Katalysators (Hydrierung) erhalten wird, oder TDAE (treated destillate aromatic extract). Hinsichtlich dieser Mineralölweichmacher sei in diesem Zusammenhang exemplarisch auf V. Null, "Safe Process Oils for Tires with Low Environmental Impact", Kautschuk Gummi Kunststoffe, 12/1999, S. 799-805 verwiesen. Die Verwendung derartiger Mineralölweichmacher in Kautschukmischungen ist z. B. auch aus der EP 0 940 462 A2 bekannt.
Wird ein Mineralölweichmacher mit einer Glasübergangstemperatur von weniger als - 45 °C verwendet, kann man die Kälteflexibilität bei tieferen Temperaturen weiter verbessern.

Als Harze können alle dem Fachmann bekannten Harze mit den entsprechenden Molekulargewichten und Erweichungspunkten eingesetzt werden. Bevorzugt handelt es sich bei dem Harz um ein Cumaron-Inden-Harz. Es können beispielsweise Harze des Typs Novares^{®} C10 und C30 von der Firma Rütgers Chemicals AG, Duisburg eingesetzt werden, die als Aromatenextraktersatz für Dienkautschukmischungen angeboten werden.

Aus verarbeitungstechnischen Gründen hat es sich als vorteilhaft erwiesen, wenn das Harz ein mittleres Molekulargewicht bestimmt mit GPC von 250 bis 300 g/mol und/oder einen Erweichungspunkt von weniger als 20 °C aufweist. Diese Harze lassen sich ohne starke Erwärmung in die üblicherweise zur Herstellung von Kautschukmischungen verwendeten Mischer einspritzen. Außerdem weisen Reifen mit einem Laufstreifen mit einer solchen Mischung eine verbesserte Traktion auf.

Als Füllstoffe kann die Kautschukmischung neben dem Aktivruß auch noch andere Ruße, Kieselsäure, Aluminiumhydroxid, Schichtsilikate, Kreide, Stärke, Magnesiumoxid, Titandioxid, Kautschukgele, Kurzfasern usw. in beliebigen Kombinationen enthalten.

Neben den bereits genannten Inhaltsstoffen kann die Kautschukmischung weitere in der Kautschukindustrie übliche Zusatzstoffe wie z. B. weitere Weichmacher, Alterungsschutzmittel, Aktivatoren, wie z. B. Zinkoxid und Fettsäuren (z. B. Stearinsäure), Wachse, Kupplungsagenzien zur Anbindung polarer Füllstoffe an Kautschuk und Mastikationshilfsmittel in üblichen Gewichtsteilen enthalten.

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N`-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Handelt es sich bei der erfindungsgemäßen Kautschukmischung um eine so genannte Rußmischung, d. h. eine Mischung, die als Füllstoff im Wesentlichen Ruß enthält, so weist die Kautschukmischung gemäß einer bevorzugten Weiterbildung der Erfindung zumindest folgende Bestandteile in den angegebenen Mengen auf:
- 5 - 70 phr Naturkautschuk, Polybutadien und/oder synthetisches Polyisopren,
- 30 - 95 phr zumindest eines emulsionspolymerisierten Styrol-Butadien-Copolymers,
- 0 - 50 phr zumindest eines weiteren Styrol-Butadien-Copolymers und
- 30 - 100 phr zumindest eines Rußes mit einer Iodadsorptionszahl von 100 - 180 g/kg und einer DBP-Zahl von 100 -150 cm³/100 g.

Handelt es sich bei der erfindungsgemäßen Kautschukmischung hingegen um eine so genannte Silicamischung, d. h. eine Mischung, die als Füllstoff im Wesentlichen Kieselsäure enthält, so weist die Kautschukmischung gemäß einer alternativen Weiterbildung der Erfindung zumindest folgende Bestandteile in den angegebenen Mengen auf:
- 5 - 70 phr Naturkautschuk, Polybutadien und/oder synthetisches Polyisopren,
- 30 - 95 phr zumindest eines lösungspolymerisierten Styrol-Butadien-Copolymers mit einem Vinyl-Anteil von mehr als 35 %,
- 0 - 60 phr zumindest eines weiteren Styrol-Butadien-Copolymers,
- 5 - 35 phr zumindest eines Rußes mit einer Iodadsorptionszahl von 100 - 180 g/kg und einer DBP-Zahl von 100 - 150 cm³/100 g und
- 20 - 100 phr Kieselsäure.
Silicamischungen zeichnen sich im Vergleich zu Rußmischungen durch ein besseres Bremsverhalten und einen geringeren Rollwiderstand aus.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Fahrzeugluftreifenrohlings wie bekannt aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche, die dem Chipping und Chunking ausgesetzt ist, aus der erfindungsgemäßen Kautschukmischung hergestellt worden ist.

Die Erfindung soll nun anhand von Vergleichs- und Ausführungsbeispielen, die in den Tabellen 1 und 2 zusammengefasst sind, näher erläutert werden.

Bei sämtlichen in den Tabellen 1 und 2 enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfindungsgemäßen Mischungen sind mit E gekennzeichnet. Bei den Mischungen der Tabelle 1 handelt es sich um Rußmischungen, in Tabelle 2 sind Silicamischungen aufgeführt. Die Mischungen wurde härtegleich eingestellt.

Mit den Mischungen gemäß Tabelle 1 und 2 wurden Reifen hergestellt, deren Laufstreifen aus den angegebenen Mischungen bestehen. Mit diesen Reifen wurde vergleichende Versuche bezüglich des Chipping-und-Chunking-Verhaltens, des ABS-Nassbremsens, das ABS-Trockenbremsens, des Rollwiderstandes und des Abriebs durchgeführt. Die entsprechenden Eigenschaften von Reifen mit einem Laufstreifen aus einer herkömmlichen Mischung gemäß V(1) und V(6) wurden gleich 100 gesetzt, Werte größer als 100 bedeuten eine Verbesserung der entsprechenden Eigenschaft (Wertung, rating).

**Tabelle 1**

| **Bestandteile** | **Einheit** | **1(V)** | **2(V)** | **3(V)** | **4(V)** | **5(E)** |
|---|---|---|---|---|---|---|
| Naturkautschuk | phr | 5 | 5 | 5 | 5 | 5 |
| BR^{a} | phr | 15 | 15 | 15 | 15 | 15 |
| E-SBR^{b} | phr | 80 | 80 | 80 | 80 | 80 |
| Ruß N-339 | phr | 80 | 80 | - | 80 | - |
| Ruß N-121 | phr | - | - | 80 | - | 80 |
| aromatisches Prozessöl | phr | 30 | - | 33 | 20 | - |
| TDAE^{c} | phr | - | 27 | - | - | 20 |
| Harz^{d} | phr | - | - | - | 10 | 10 |
| Alterungsschutzmittel | phr | 1,5 | 1,5 | 1,5 | 1,5 | 1,5 |
| Zinkoxid | phr | 2 | 2 | 2 | 2 | 2 |
| Stearinsäure | phr | 1 | 1 | 1 | 1 | 1 |
| Beschleuniger | phr | 1,9 | 1,9 | 1,9 | 1,9 | 1,9 |
| Schwefel | phr | 2,1 | 2,1 | 2,1 | 2,1 | 2,1 |

| **Reifeneigenschaft** | | | | | | |
|---|---|---|---|---|---|---|
| Chipping und Chunking | | 100 | 95 | 93 | 100 | 125 |
| ABS-Trockenbremsen | | 100 | 99 | 100 | 102 | 102 |
| ABS-Nassbremsen | | 100 | 98 | 102 | 103 | 103 |
| Rollwiderstand | | 100 | 102 | 98 | 98 | 100 |
| Abrieb | | 100 | 102 | 105 | 100 | 110 |

| | | | | | | |
|---|---|---|---|---|---|---|
| ^{a} High-cis Polybutadien ^{b} E-SBR 1500, Styrogehalt: 23,5 Gew.-% ^{c} **t**reated **d**estillate **a**romatic **e**xtract ^{d} Cumaron-Inden-Harz, M_{w} = 270 g/mol, Erweichungspunkt: 10 °C, Norares^{®} C10, Rütgers Chemicals AG, Deutschland | | | | | | |

**Tabelle 2**

| **Bestandteile** | **Einheit** | **6(V)** | **7(V)** | **8(V)** | **9(V)** | **10(E)** |
|---|---|---|---|---|---|---|
| Naturkautschuk | phr | 30 | 30 | 30 | 30 | 30 |
| High-vinyl-S-SBR^{e} | phr | 70 | 70 | 70 | 70 | 70 |
| Kieselsäure^{f} | phr | 85 | 85 | 85 | 85 | 85 |
| Ruß N-339 | phr | 15 | 15 | - | 15 | - |
| Ruß N-121 | phr | - | - | 15 | - | 15 |
| aromatisches Prozessöl | phr | 20 | - | 22 | 10 | - |
| TDAE^{c} | phr | - | 17 | - | - | 10 |
| Harz^{d} | phr | - | - | - | 10 | 10 |
| Verarbeitungshilfsmittel | phr | 4 | 4 | 4 | 4 | 4 |
| Alterungsschutzmittel | phr | 4 | 4 | 4 | 4 | 4 |
| Zinkoxid | phr | 2 | 2 | 2 | 2 | 2 |
| Stearinsäure | phr | 1 | 1 | 1 | 1 | 1 |
| Beschleuniger | phr | 4 | 4 | 4 | 4 | 4 |
| Schwefel | phr | 1,7 | 1,7 | 1,7 | 1,7 | 1,7 |

| **Reifeneigenschaft** | | | | | | |
|---|---|---|---|---|---|---|
| Chipping und Chunking | | 100 | 95 | 90 | 100 | 120 |
| ABS-Trockenbremsen | | 100 | 99 | 100 | 102 | 102 |
| ABS-Nassbremsen | | 100 | 98 | 100 | 103 | 102 |
| Rollwiderstand | | 100 | 101 | 99 | 99 | 100 |
| Abrieb | | 100 | 102 | 102 | 100 | 105 |

| | | | | | | |
|---|---|---|---|---|---|---|
| ^{e} NS 116 R, Nippon Zeon, Japan, Vinylgehalt: 63 Gew.-%, Styrolgehalt: 21 Gew.-% ^{f} VN3, Degussa AG, Deutschland ^{c} **t**reated **d**estillate **a**romatic **e**xtract ^{d} Cumaron-Inden-Harz, M_{w} = 270 g/mol, Erweichungspunkt: 10 °C, Norares^{®} C10, Rütgers Chemicals AG, Duisburg | | | | | | |

Aus den Tabellen wird ersichtlich, dass nur die spezielle Kombination von speziellem Ruß mit Weichmachern mit geringem Gehalt an polycylischen aromatischen Verbindungen und mit speziellem Harz zu einer deutlichen und überraschenden Verbesserung des Chipping-und-Chunking-Verhaltens sowohl bei Ruß- als auch bei Silicamischungen führt. Die anderen Reifeneigenschaften bleiben dabei unverändert oder werden sogar verbessert, wie beispielsweise der Abrieb.

Der Austausch nur einzelner Komponenten, wie in den Mischungen 2(V) bis 4(V) und 7(V) bis 9(V), ist hingegen mit Nachteilen oder maximal einem Gleichbleiben im Chipping-und-Chunking-Verhalten verbunden.

## Patentansprüche

1. Schwefelvernetzbare Kautschukmischung ohne aromatische Prozessöle, insbesondere für den Laufstreifen von Fahrzeugluftreifen, enthaltend
- zumindest einen Dienkautschuk,
- 5 - 100 phr (Gewichtsteile, bezogen auf 100 Gewichtsteile der gesamten Kautschuke in der Mischung) zumindest eines Rußes mit einer Iodadsorptionszahl von 100 - 180 g/kg und einer DBP-Zahl von 100 - 150 cm³/100 g,
- 5 - 80 phr zumindest eines Mineralölweichmachers, der einen Gehalt an polycyclischen aromatischen Verbindungen bestimmt mit dem DMSO-Extrakt nach der IP 346 Methode von weniger als 3 Gew.-% bezogen auf das Gesamtgewicht des Mineralölweichmachers aufweist, und
- 5 - 30 phr zumindest eines Harzes mit einem mittleren Molekulargewicht bestimmt mit GPC von weniger als 400 g/mol und einem Erweichungspunkt (Ring und Kugel gemäß ASTM E 28) von weniger als 40 °C.

2. Kautschukmischung nach Anspruch 1, **dadurch gekennzeichnet, dass** der Ruß eine Iodadsorptionszahl von 110 - 130 g/kg und einer DBP-Zahl von 120 - 140 cm³/1 00 g aufweist.

3. Kautschukmischung nach Anspruch 1 oder 2, **dadurch gekennzeichnet, dass** das Harz ein Cumaron-Inden-Harz ist.

4. Kautschukmischung nach zumindest einem der vorhergehenden Ansprüche, **dadurch gekennzeichnet, dass** das Harz ein mittleres Molekulargewicht bestimmt mit GPC von 250 - 300 g/mol aufweist.

5. Kautschukmischung nach zumindest einem der vorhergehenden Ansprüche, **dadurch gekennzeichnet, dass** das Harz einen Erweichungspunkt (Ring und Kugel gemäß ASTM E 28) von weniger als 20 °C aufweist.

6. Kautschukmischung nach zumindest einem der vorhergehenden Ansprüche, **dadurch gekennzeichnet, dass** sie
- 5 - 70 phr Naturkautschuk, Polybutadien und/oder synthetisches Polyisopren,
- 30 - 95 phr zumindest eines emulsionspolymerisierten Styrol-Butadien-Copolymers,
- 0 - 50 phr zumindest eines weiteren Styrol-Butadien-Copolymers und
- 30 - 100 phr zumindest eines Rußes mit einer Iodadsorptionszahl von 100 - 180 g/kg und einer DBP-Zahl von 100 - 150 cm³/100 g enthält.

7. Kautschukmischung nach zumindest einem der vorhergehenden Ansprüche, **dadurch gekennzeichnet, dass** sie
- 5 - 70 phr Naturkautschuk, Polybutadien und/oder synthetisches Polyisopren,
- 30 - 95 phr zumindest eines lösungspolymerisierten Styrol-Butadien-Copolymers mit einem Vinyl-Anteil von mehr als 35 %,
- 0 - 60 phr zumindest eines weiteren Styrol-Butadien-Copolymers,
- 5 - 3 phr zumindest eines Rußes mit einer Iodadsorptionszahl von 100 - 180 g/kg und einer DBP-Zahl von 100 - 150 cm³/100 g und
- 20 - 100 phr Kieselsäure enthält.

8. Fahrzeugluftreifen mit einem Laufstreifen der zumindest zum Teil aus einer mit Schwefel vulkanisierten Kautschukmischung nach einem der Ansprüche 1 bis 7 besteht.

## Claims

1. Sulphur-vulcanizable rubber mixture without aromatic process oils, particularly for the tread strip of pneumatic vehicle tyres, containing
- at least one diene rubber,
- 5-100 phr (parts by weight, relative to 100 parts by weight of the total rubbers in the mixture) of at least one carbon black having an iodine adsorption number of 100-180 g/kg and a DBP number of 100-150 cm³/100 g,
- 5-80 phr of at least one mineral oil plasticizer which contains less than 3% by weight, relative to the total weight of the mineral oil plasticizer, of polycyclic aromatic compounds determined with the DMSO extract according to the IP 346 method, and
- 5-30 phr of at least one resin having an average molecular weight determined by GPC of less than 400 g/mol and a softening point (ring and ball as per ASTM E 28) of less than 40°C.

2. Rubber mixture according to Claim 1, **characterized in that** the carbon black has an iodine adsorption number of 110-130 g/kg and a DBP number of 120-140 cm³/100 g.

3. Rubber mixture according to Claim 1 or 2, **characterized in that** the resin is a coumarone-indene resin.

4. Rubber mixture according to at least one of the preceding claims, **characterized in that** the resin has an average molecular weight determined by GPC of 250-300 g/mol.

5. Rubber mixture according to at least one of the preceding claims, **characterized in that** the resin has a softening point (ring and ball as per ASTM E 28) of less than 20°C.

6. Rubber mixture according to at least one of the preceding claims, **characterized in that** it contains
- 5-70 phr of natural rubber, polybutadiene and/or synthetic polyisoprene,
- 30-95 phr of at least one emulsion-polymerized styrene-butadiene copolymer,
- 0-50 phr of at least one further styrene-butadiene copolymer, and
- 30-100 phr of at least one carbon black having an iodine adsorption number of 100-180 g/kg and a DBP number of 100-150 cm³/100 g.

7. Rubber mixture according to at least one of the preceding claims, **characterized in that** it contains
- 5-70 phr of natural rubber, polybutadiene and/or synthetic polyisoprene,
- 30-95 phr of at least one solution-polymerized styrene-butadiene copolymer having a vinyl content of more than 35%,
- 0-60 phr of at least one further styrene-butadiene copolymer,
- 5-35 phr of at least one carbon black having an iodine adsorption number of 100-180 g/kg and a DBP number of 100-150 cm³/100 g, and
- 20-100 phr of silica.

8. Pneumatic vehicle tyre having a tread strip consisting at least partly of a sulphur-vulcanized rubber mixture according to any one of Claims 1 to 7.

## Revendications

1. Mélange caoutchoutique réticulable par du soufre sans huiles de mise en oeuvre aromatiques, notamment pour les bandes de roulement de pneus automobiles, contenant
- au moins un caoutchouc diénique,
- 5 à 100 phr (parties en poids, par rapport à 100 parties en poids du total des caoutchoucs dans le mélange) d'au moins une suie ayant un indice d'adsorption d'iode de 100 à 180 g/kg et un indice DBP de 100 à 150 cm³/100 g,
- 5 à 80 phr d'au moins un plastifiant à base d'une huile minérale, qui présente une teneur en composés aromatiques polycycliques déterminée avec l'extrait dans du DMSO par le procédé IP 346 inférieure à 3 % en poids par rapport au poids total du plastifiant à base d'une huile minérale, et
- 5 à 30 phr d'au moins une résine ayant un poids moléculaire moyen déterminé par CPG inférieur à 400 g/mol et un point de ramollissement (bille et anneau selon ASTM E 28) inférieur à 40 °C.

2. Mélange caoutchoutique selon la revendication 1, **caractérisé en ce que** la suie présente un indice d'adsorption d'iode de 110 à 130 g/kg et un indice DBP de 120 à 140 cm³/100 g.

3. Mélange caoutchoutique selon la revendication 1 ou 2, **caractérisé en ce que** la résine est une résine coumarone-indène.

4. Mélange caoutchoutique selon au moins l'une quelconque des revendications précédentes, **caractérisé en ce que** la résine présente un poids moléculaire moyen déterminé par CPG de 250 à 300 g/mol.

5. Mélange caoutchoutique selon au moins l'une quelconque des revendications précédentes, **caractérisé en ce que** la résine présente un point de ramollissement (bille et anneau selon ASTM E 28) inférieur à 20 °C.

6. Mélange caoutchoutique selon au moins l'une quelconque des revendications précédentes, **caractérisé en ce qu'**il contient
- 5 à 70 phr de caoutchouc naturel, de polybutadiène et/ou de polyisoprène synthétique,
- 30 à 95 phr d'au moins un copolymère styrène-butadiène polymérisé en émulsion,
- 0 à 50 phr d'au moins un copolymère styrène-butadiène supplémentaire et
- 30 à 100 phr d'au moins une suie ayant un indice d'adsorption d'iode de 100 à 180 g/kg et un indice DBP de 100 à 150 cm³/100 g.

7. Mélange caoutchoutique selon au moins l'une quelconque des revendications précédentes, **caractérisé en ce qu'**il contient
- 5 à 70 phr de caoutchouc naturel, de polybutadiène et/ou de polyisoprène synthétique,
- 30 à 95 phr d'au moins un copolymère styrène-butadiène polymérisé en solution, ayant une proportion de vinyle supérieure à 35 %,
- 0 à 60 phr d'au moins un copolymère styrène-butadiène supplémentaire,
- 5 à 35 phr d'au moins une suie ayant un indice d'adsorption d'iode de 100 à 180 g/kg et un indice DBP de 100 à 150 cm³/100 g et
- 20 à 100 phr de silice.

8. Pneu automobile comportant une bande de roulement qui est constituée au moins en partie d'un mélange caoutchoutique selon l'une quelconque des revendications 1 à 7, vulcanisé par du soufre.
